# EUROPÄISCHE PATENTSCHRIFT

(11) **EP 1 105 932 B1**
(45) Veröffentlichungstag und Bekanntmachung des Hinweises auf die Patenterteilung: **14.06.2006**
(21) Anmeldenummer: 99941445.1
(22) Anmeldetag: 20.07.1999
(51) Int. Cl.: H01M 8/24, H01M 8/10

(54) **POLYMERELEKTROLYT-MEMBRAN-BRENNSTOFFZELLE**
FUEL CELL WITH POLYMERELECTROLYTE MEMBRANE
PILE A COMBUSTIBLE A MEMBRANE ELECTROLYTIQUE POLYMERE

(30) Priorität: 22.07.1998 DE 19833064
(43) Veröffentlichungstag der Anmeldung: 13.06.2001
(73) Patentinhaber: Fraunhofer-Gesellschaft zur Förderung der angewandten Forschung e.V., 80686 München (DE)
(72) Erfinder: ZEDDA, Mario, D-79249 Merzhausen (DE); HEINZEL, Angelika, D-79224 Umkirch (DE); NOLTE, Roland, D-79211 Denzlingen (DE)
(74) Vertreter: Pfenning, Meinig & Partner GbR
(86) Internationale Anmeldenummer: PCT/EP1999/005146
(87) Internationale Veröffentlichungsnummer: WO 2000/005776

(56) Entgegenhaltungen:
- WO-A-96/18216
- WO-A-96/18217
- WO-A-98/16963
- DE-C- 19 502 391
- PATENT ABSTRACTS OF JAPAN vol. 018, no. 139 (E-1519), 8. März 1994 (1994-03-08) -& JP 05 325993 A (SANYO ELECTRIC CO LTD), 10. Dezember 1993 (1993-12-10)
- PATENT ABSTRACTS OF JAPAN vol. 010, no. 306 (E-446), 17. Oktober 1986 (1986-10-17) -& JP 61 121265 A (MITSUBISHI ELECTRIC CORP), 9. Juni 1986 (1986-06-09)
- PATENT ABSTRACTS OF JAPAN vol. 017, no. 334 (E-1387), 24. Juni 1993 (1993-06-24) -& JP 05 041221 A (MITSUBISHI HEAVY IND LTD), 19. Februar 1993 (1993-02-19)

## Beschreibung

Die Erfindung bezieht sich auf eine Brennstoffzelle für Ausgangsspannungen, bei der jeweils aufeinanderfolgend benachbarte Zellen elektrisch in Reihe geschaltet sind. Derartige Brennstoffzellen werden beispielsweise für den Betrieb elektrischer Kleingeräte wie z.B. mobiler Computer verwendet.

Brennstoffzellen sind elektrochemische Energiewandler, die chemische Energie mit hohen Wirkungsgraden auf direktem Weg in elektrische Energie umwandeln. In der Regel werden die Brennstoffe gasförmig oder flüssig zugeführt, und die Zelle kann solange elektrische Energie abgeben, wie Brennstoffe nachgeliefert werden.

Im Prinzip besteht eine Brennstoffzelle vereinfachend aus zwei Elektroden, die durch einen Elektrolyten voneinander getrennt sind. An der Anode findet unter Abgabe von Elektronen die elektrochemische Oxidation des Brennstoffes, an der Kathode unter Aufnahme von Elektronen die elektrochemische Reduktion des Oxidationsmittels statt. Den Ionentransport zwischen den Elektroden übernimmt der Elektrolyt. Als typische Brennstoffe für eine solche Zelle werden Wasserstoff oder Methanol eingesetzt, als Oxidationsmittel wird in der Regel Sauerstoff oder Luft verwendet. Im Falle einer PEM (Polymer-Elektrolyt-Membran)-Brennstoffzelle dient eine protonenleitende, polymere Membran als nichtgasdurchlässiger Elektrolyt.

Eine derartige Wasserstoff-Sauerstoff-Brennstoffzelle besitzt beispielsweise bei Raumtemperatur eine theoretische Leerlaufspannung von 1,23 V, unter Belastung steht jedoch lediglich eine Spannung von c.a. 0,5 bis 0,7 V zur Verfügung. Derartige Spannungen sind für den praktischen Einsatz nicht ausreichend, da für den Betrieb elektrischer Kleingeräte oft Spannungen im Bereich von 10 bis 20 V benötigt werden.

Nach dem Stand der Technik werden deshalb eine Vielzahl von einzelnen Zellen beispielsweise als parallele Ebenen übereinander angeordnet und mittels elektrisch leitfähiger sogenannter bipolarer Platten in Reihe verschaltet (Stapelbauweise). Auf diese Weise kann an den Endplatten die Summe aller Einzelspannungen abgegriffen werden. Eine solche Anordnung ist beispielsweise aus der US 4,175,165 bekannt.

Eine andere Möglichkeit der Reihenverschaltung und damit der Bereitstellung hoher Spannungen ist die Anordnung der einzelnen Zellen in einer Ebene. Eine derartige Konstruktion ordnet die einzelnen Zellen planar nebeneinander an, wobei jeweils die Anode der ersten Zelle mit der Kathode der zweiten, die Anode der zweiten mit der Kathode der dritten Einzelzelle usw. elektrisch verschaltet wird, so daß an der ersten Kathode und der letzten Anode dieser räumlich flächigen funktionell linearen Anordnung mehrerer Einzelelektroden die Summe der Einzelspannungen abgegriffen werden kann. Dieses Konzept bietet gegenüber der Stapelbauweise den Vorteil in sehr flacher und geometrisch leicht variierbarer Bauweise höhere Ausgangsspannungen realisieren zu können und eignet sich daher sehr gut für den Einsatz von Brennstoffzellen als Energieversorgung in portablen Geräten wie beispielsweise Laptop-Computern oder Camcordern.

Ein wesentlicher Punkt in der Konstruktion derartiger planarer Systeme liegt darin, daß das benötigte Volumen nicht größer ist als das eines vergleichbaren, nur aus Einzelzellen bestehenden Stapels. Wichtige Einflußgrößen sind hier insbesondere die Anzahl der Zellen je planare Einheit und die Breite der Randbereiche um jede Einzelbrennstoffzelle in der innerhalb der planaren Einheit herum. Besonders relevant ist die Breite des Zwischenbereichs zwischen zwei benachbarten, planar nebeneinander angeordneten Elektroden, der zur Abdichtung der Einzelzellen gegeneinander und/oder der elektrischen Verschaltung der Einzelzellen dient.

Ein Beispiel für eine derartige planare Verschaltung mehrerer Brennstoffeinzelzellen zeigt die DE 195 02 391 C1. In diesen Membranelektrodeneinheiten, die aus planar angeordneten und elektrisch in Reihe geschalteten Einzelelektroden bestehen, überlappen sich die Einzelelektroden im Zwischenbereich derart, daß sich eine treppenförmige Überschneidung der benachbarten Anoden und Kathoden ergibt. Zwischen den zu verschaltenden Anoden und Kathoden der jeweils benachbarten Einzelzellen ist eine elektrisch leitfähige Querleitstruktur angeordnet, um den elektrischen Widerstand beim Übergang von einer Einzelzelle zur anderen zu minimieren und dadurch den In-Widerstand der gesamten Brennstoffzellenanordnung möglichst gering zu halten. Unter der Bedingung, daß die Querleitstrukturen und die Elektroden keine Durchlässigkeit für die Brennstoffmaterialien in Richtung ihrer flächigen Ausdehnung besitzen, wird auch die unbedingt notwendige Abdichtung der Anodenseiten der Brennstoffeinzelzellen gegenüber den Kathodenseiten der Brennstoffeinzelzellen gewährleistet. Eine derartige Gasdichtigkeit des Bereiches Elektrode-Querleitstruktur-Elektrode wird beispielsweise durch Verklebungstechniken erzielt.

Die in der DE 195 02 391 C1 beschriebene planare Anordnung ist jedoch leider nicht universell einsetzbar. Insbesondere werden heutzutage fertige, im Handel erhältliche Membran-Elektroden-Einheiten verwendet, bei denen bereits eine poröse Diffusionsschicht in Form eines porösen Kohlepapiers oder Kohlevlieses mit der Elektrode fest verbunden ist oder die jeweiligen Elektroden bereits als poröse Diffusionsschichten ausgeführt sind. Die auf derartige, kommerziell erhältliche Einzelelektroden bereits festaufgebrachte Kohlepapiere sind in alle geometrischen Richtungen porös und besitzen oftmals eine Dicke von mehreren 100 *µ*m. Damit eignet sich die Anordnung nach der DE 195 02 391 C1 nicht zur Verwendung von beliebigen, bereits vorgefertigten Membranelektrodeneinheiten.

Aufgabe der vorliegenden Erfindung ist es daher eine Brennstoffzelle nanordnung für hohe Ausgangsspannungen aus mindestens zwei Brennstoffeinzelzellen, die elektrisch in Reihe geschaltet sind, zur Verfügung zu stellen, die einen optimierten Platzbedarf besitzt und eine gasdichte elektrische Verbindung zwischen den Anoden- und Kathodenseiten der Einzelzellen gewährleistet.

Diese Aufgabe wird durch die Brennstoffzelle nanordnung nach dem Oberbegriff des Anspruch 1 in Verbindung mit seinen kennzeichnenden Merkmalen gelöst.

Die Verbindung der Anoden- und Kathodenseite zweier aufeinanderfolgender Einzelzellen durch eine sich zwischen der Anodenseite der einen Einzelzelle und der Kathodenseite der anderen Einzelzelle erstreckenden Querleitstruktur ermöglicht einen modularen, planaren Aufbau einer seriellen Reinverschaltung benachbarter Einzelzellen. Insbesondere ist der Platzbedarf zwischen den Einzelzellen sehr gering, da lediglich die mit einem geringen elektrischen Widerstand versehene Querleitstruktur im Zwischenbereich zwischen den Zellen von einer Zellenseite zur anderen hindurchgeführt werden muß. Dadurch ergeben sich Zwischenbereich sehr kleiner Breite und folglich einen optimierten Platzbedarf für die erfindungsgemäße flächige Anordnung der Einzelzellen.

Indem von jeder der Einzelzellen ausgehend sich die bereits gasdichte Elektrolytmembran auf je einer Seite der Querleitstruktur in den Zwischenraum zwischen den Einzelzellen erstreckt und dort abdichtend an der Querleitstruktur anliegt, ergibt sich, sofern die Querleitstruktur in Richtung ihrer Flächenausdehnung gasdicht ist, eine vollständige Abdichtung der beiden Brennstoffräume auf der Anodenseite bzw. der Kathodenseite der Brennstoffeinzelzellen. Da die Anoden und Kathoden der Einzelzellen nicht in die Zwischenräume zwischen den Einzelzellen ragen und insbesondere sich nicht bis in den Brennstoffraum auf der anderen Seite der Einzelzelle erstrecken, ist es durch die erfindungsgemäße Anordnung möglich auch Membranelektrodenverbunde als Brennstoffzellen zu verwenden, deren Elektroden selbst porös und gasdurchlässig sind. Insbesondere können selbstverständlich auch Elektrodenmembranverbunde verwendet werden, die ihrerseits mit einem porösen Material, beispielsweise einem Kohlepapier oder Kohlefließ zur besseren Verteilung der Brennstoffe auf der jeweiligen Elektroden beschichtet sind.

Vorteilhafte Weiterbildungen der erfindungsgemäßen Brennstoffzelle werden in den abhängigen Ansprüchen gegeben.

Die gasdichte Verbindung zwischen den Membranen und der Querleitstruktur kann besonders einfach durch einfachen Druck des Brennstoffzellengehäuses auf die Membranen im Zwischenbereich zwischen den Einzelbrennstoffzellen erzielt werden. Dadurch läßt sich auch eine Abdichtung seitlich benachbarter Gasräume verschiedener Einzelbrennstoffzellen gegeneinander erzielen. Durch eine Dichtung zwischen dem Gehäuse und der Brennstoffzelle und jeder Membran kann diese Abdichtung durch Erhöhung des dort ausgeübten Drucks weiter verbessert werden.

Querleitstrukten, die in Richtung ihrer Flächenausdehnung gasdicht sind, bestehen aus flächigen Lochblechen und/oder Streckmetallen, vorzugsweise aus Edelstahl oder Titan. Wird jedoch als Querleitstruktur ein Material verwendet, das auch in Richtung der Flächenausdehnung brennstoffdurchlässig ist, so kann die Undurchlässigkeit der Querleitstruktur im Zwischenbereich durch eine Beschichtung mit einem geeigneten für den Brennstoff undurchlässigen Material, beispielsweise durch Beschichtung mit einem Polymer erzielt werden. Derartige Querleitstrukturen können aus Geweben, Papieren oder Fließen aus Kohlenstoff und/oder Metall hergestellt werden, auf die eine Polymerlösung aufgebracht und anschließend das Lösungsmittel verdampft oder in die eine Polymerschmelze eingebracht wird.

Sofern die Querleitstruktur die jeweiligen zugeordneten Elektroden flächig bedeckt, ist selbstverständlich zu fordern, daß die Querleitstruktur senkrecht zu ihrer Flächenausdehnung für die Brennstoffe durchlässig ist, was beispielsweise bei den genannten Lochblechen gegeben ist.

Als Elektrolytmembran werden Kationenaustauschermembranen bevorzugt, die hydrolysestabil und stabil gegenüber Oxidation und insbesondere stabil gegenüber Wasserstoff bzw. gegenüber Methanol sind. Derartige Elektrolytmembranen können aus fluorierten Membranen, beispielsweise die Membran Nafion® der Firma DuPont, Membranen aus sulfonierten Polymeren mit aromatischen oder teilweise aromatischen Rückgrat wie Polysulfone, Polyethersulfone, Polyetherketone oder Polybenzimidazole oder anderen bei Betriebstemperatur der Brennstoffzelle sulfonierten Polymeren wie beispielsweise Polystyrole bestehen.

Als ionenleitende Elektrolytmembranen werden folglich in der Regel protonenleitende, in Wasser quellbare Polymere verwendet. Sie enthalten meist Sulfonsäuregruppen, die in wäßriger Umgebung dissozieren und somit die Protonenleitfähigkeit der Membran generieren. Damit verbunden ist jedoch eine Absenkung des pH-Wertes innerhalb der Membran in den saueren Bereich. Im Gegensatz zu der Anordnung nach dem Stand der Technik DE 195 092 391 C1 steht die Ionenaustauschermembran nunmehr innerhalb des Zwischenbereichs zwischen den Einzelzellen in unmittelbaren Kontakt mit der Querleitstruktur. Die Querleitstruktur besteht vorzugsweise aus Metallen, die aufgrund des Kontaktes mit dem stark saueren Membranmedium frühzeitig korrodieren können und daher die Zelle geschädigt werden kann.

Um dies zu vermeiden, kann zwischen der Metallstruktur und der saueren Elektrolytmembran eine dünne nichtleitende Polymerfolie eingebunden werden. Dadurch steht die Metallstruktur und die Membran nicht mehr in unmittelbarem Kontakt. Die nichtleitende Folie kann beim Zusammenbau der gesamten Brennstoffzelle zwischen die Metallstruktur und die jeweilige Membran als separates Folienstück eingelegt werden. Sie kann jedoch auch bereits vor dem Zellzusammenbau mit der Querleitstruktur im Zwischenbereich fest verbunden werden. Dies kann beispielsweise dadurch erfolgen, daß auf beiden Seiten der Querleitstruktur eine nichtleitende Folie aufgelegt wird und diese Folie anschließend unter Anwendung von Druck und/oder Temperatur in die Metallstruktur eingepreßt oder mit ihr verbunden wird. Ein solcher Verbund kann auch erzeugt werden, indem eine viskose Polymerlösung auf die Querleitstruktur aufgebracht und das Lösungsmittel anschließend abgedampft oder indem eine Polymerschmelze auf die Querleitstruktur aufgebracht und anschließend erstarrt wird. Diese Verfahren vermeiden die Notwendigkeit einer exakten Justierung der leitenden Folie beim Zusammenbau der Einzellzellen zu der gesamten Brennstoffzelle. Die hier genannten nichtleitfähigen Folien, bzw. Polymere die Materialien, die zur Erzeugung der Gasundurchlässigkeit einer porösen Querleitstruktur im Zwischenbereich benötigt werden, unterliegen ähnlichen Stabilitätsanforderungen, wie die ionenleitenden Elektrolytmembranen selbst (Oxidationsstabilität, Reduktionsstabilität, Hydrolysestabilität) zusätzlich dürfen sie weder ionenleitend noch elektronenleitend sein. Beispiele hierfür sind: Polysulfone, Polyethersulfone, Polyetherketone oder Dichtungsmaterialien wie Viton® . Bei Temperaturen deutlich unterhalb von 80 °C können auch Standardpolymere wie Polyethylen, Polypropylen oder Polystyrol eingesetzt werden.

Die Korrsosionsstabilität der Querleitstruktur im Kontakt mit der stark saueren Elektrolytmembran kann auch durch eine Oberflächenveredelung, beispielsweise eine Vergoldung, verbessert werden. Derartige Oberflächenveredelungen führen weiterhin zur Reduzierung der Übergangswiderstände zwischen der Querleitstruktur und den mit dieser kontaktierenden Elektroden. Vorteilhafterweise wird das Gehäuse der erfindungsgemäßen Brennstoffzelle im Bereich der Elektroden jeder Einzelzelle mit Gasverteilungsstrukturen zur Zufuhr von Brennstoffen versehen. Weiterhin können die erfindungsgemäßen flächigen Anordnungen von Einzelzellen gestapelt übereinander angeordnet werden, wobei die einzelnen Anordnungen durch Gehäuse zwischen Platten voneinander getrennt und die erste und letzte Anordnung durch Gehäuseendplatten abgeschlossen sind. Werden die derart ihrerseits als Stapel angeordneten Einzelzellenanordnungen geeignet elektrisch in Serie verschaltet, läßt sich die Ausgangsspannung bei sehr kompakter Bauweise der Gesamtbrennstoffzelle weiter erhöhen.

Im folgenden werden einige vorteilhafte Ausführungsformen der erfindungsgemäßen Brennstoffzelle beschrieben.

Es zeigen:
- Fig. 1: eine erfindungsgemäße Brennstoffzelle;
- Fig. 2: eine weitere erfindungsgemäße Brennstoffzelle; und

- Fig. 3: eine erfindungsgemäße Querleitstruktur.

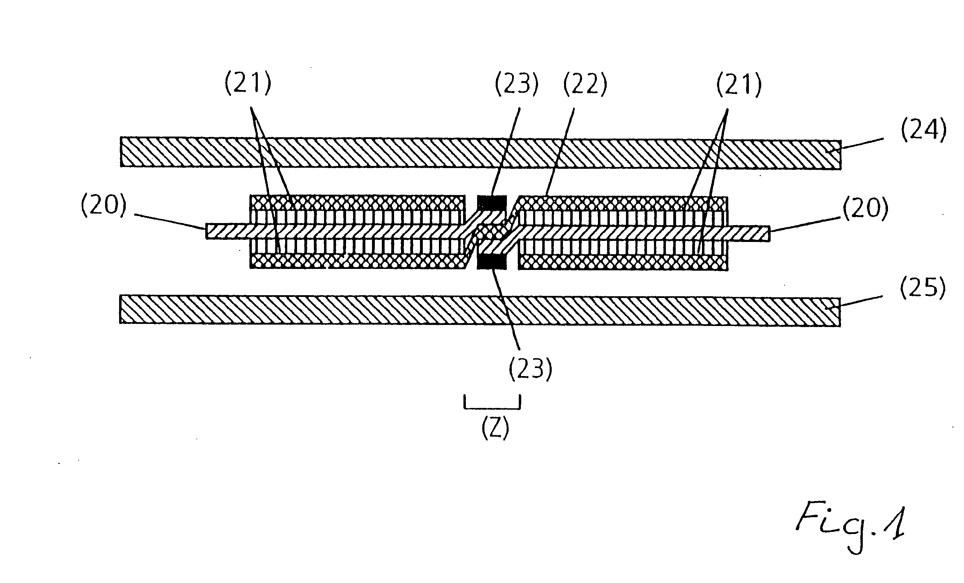

Fig. 1 zeigt eine erfindungsgemäße Brennstoffzelle, bei der innerhalb eines aus einer Deckplatte 24 und einer Bodenplatte 25 bestehenden Gehäuses zwei Brennstoffeinzelzellen planar benachbart angeordnet sind. Jede Brennstoffeinzelzelle besteht aus einer Elektrolytmembran 20, die beidseitig durch jeweils eine Elektrode 21 beschichtet ist. Die Membran 20 ragt über die jeweiligen Elektroden 21 in den zwischen den Brennstoffeinzelzellen befindlichen Zwischenbereich Z hinein. Im Zwischenbereich Z überlappen sich die Elektrolytmembranen treppenförmig. Die Elektroden 21 sind jeweils mit einer Querleitstruktur 22 beschichtet, die sich von jeweils einer Elektrode der einen Einzelzelle (Anode) zur auf der gegenüberliegenden Seite liegenden Elektrode (Kathode) der benachbarten Einzelzelle erstreckt und so die Anode und die Kathode der beiden Einzelzellen elektrisch miteinander verbindet. Die Querleitstruktur 22 ist dabei im Bereich Z für das Brennstoffmaterial in ihrer Flächenausdehnungsrichtung undurchlässig. Weiterhin ist auf den Membranen auf deren ihrer jeweiligen benachbarten Gehäuseabdeckung zugewandten Seite eine Dichtung 23 angeordnet.

Die Brennstoffzelle in Fig. 1 ist einem Zustand gezeigt, in dem das Gehäuse noch nicht festmontiert ist. Zur Montage der gesamten Brennstoffzelle werden nunmehr die beiden Gehäuseabdeckungen 24, 25 an die Einzelbrennstoffzellen angedrückt. Dabei wird über die Dichtungen 23 ein starker Druck auf die Membran-Querleitstruktur-Membran-Schichtung im Zwischenbereich Z ausgeübt und dadurch ein gasdichter Verbund hergestellt. Damit sind die oberhalb und unterhalb (anodenseitig bzw. kathodenseitig) vorhandenen Gasräume gasdicht voneinander getrennt.

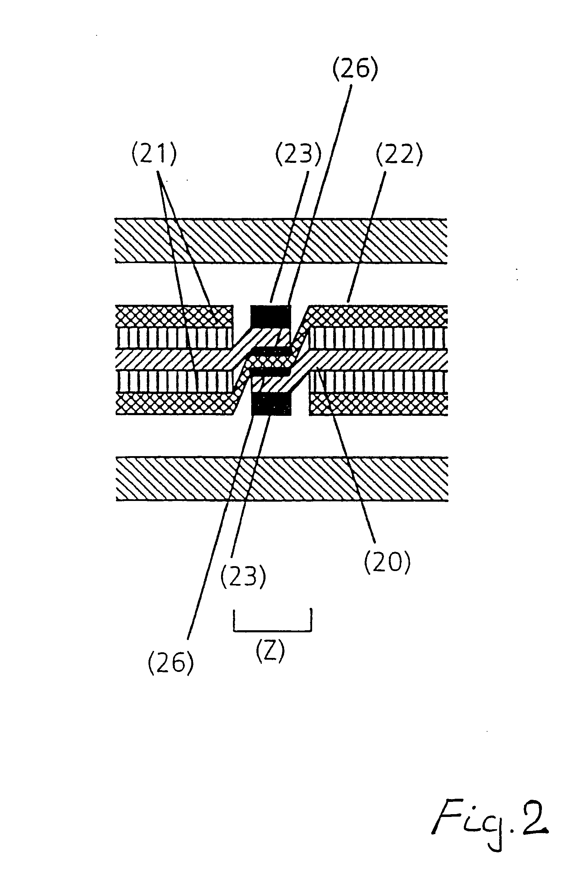

Fig. 2 zeigt eine weitere erfindungsgemäße Brennstoffzelle, deren prinzipieller Aufbau dem Aufbau aus Fig. 1 entspricht. Die entsprechenden Bezugszeichen bezeichnen dabei die entsprechenden Bauelemente. Im Unterschied zu Fig. 1 ist nunmehr zwischen die beiden Membranen 20 und die Querleitstruktur 21 im Zwischenbereich Z jeweils eine dünne Folie aus nichtionenleitendem und nicht elektrisch leitendem Material (Viton® ) eingelegt. Dadurch wird eine frühzeitige Korrosion der Querleitstruktur 22 aus Metall durch das stark sauere Milieu in den Membranen 20 verhindert.

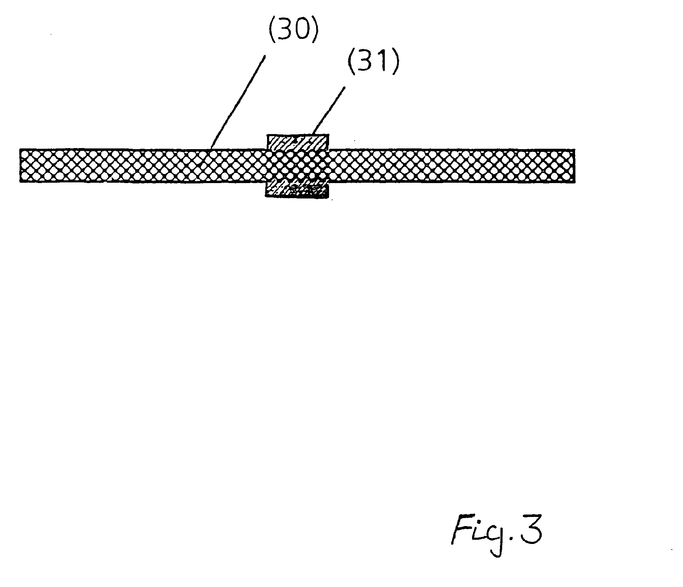

Fig. 3 zeigt eine weitere Ausführungsform der Querleitstruktur 3. Dabei wird bereits vor dem Zellzusammenbau in die Metallstruktur im Bereich des zukünftigen Zwischenbereiches Z ein Polymer 31 mit nichtionenleitenden und nicht elektrisch leitenden Eigenschaften als Polymerschmelze aufgebracht. Dieses Polymer 31 dringt dabei in die Querleitstruktur 30 ein. Nach Erstarren der Polymerschmelze sind beide Seiten der metallischen Querleitstruktur 30 von einer durchgehenden Polymerschicht 31 bedeckt, so daß nach Zusammenbau der Brennstoffzelle die Querleitstruktur gegenüber den Membranen der Einzelzellen durch die Polymerschicht 31 separiert ist. Weiterhin führt die in die im Falle der Fig. 3 poröse Querleitstruktur eingedrungene Polymerschicht 31 zu einer Dichtigkeit für die Brennstoffe in Richtung der Flächenausdehnung der Querleitstruktur 30. Dadurch wird die Abdichtung der beiden Brennstoffräume der Anodenseite und der Kathodenseite der Brennstoffeinzelzellen gewährleistet.

## Patentansprüche

1. Brennstoffzellenanordnung für hohe Ausgangsspannungen aus einer flächigen Anordnung mindestens zweier Brennstoff-Einzelzellen in einem Gehäuse (24), die jeweils eine beidseitig mit Elektroden (21) als Anode und Kathode beschichtete Elektrolytmembran (20) aufweisen, wobei die jeweils aufeinanderfolgend benachbarten Einzelzellen elektrisch in Reihe geschaltet sind, indem die Anode einer Einzelzelle mit der Kathode der benachbarten Einzelzelle über eine elektrisch leitende Querleitstruktur (22), die für die Brennstoffe in der Ebene ihrer Flächenausdehnung im Zwischenbereich undurchlässig ist, verbunden ist, die Elektrolytmembranen (20) der benachbarten Einzelzellen sich in den Zwischenbereich (Z) zwischen den Einzelzellen erstrecken und einander in einem Überlappungsbereich überlappen, die Anoden und Kathoden der Einzelzellen sich nicht in den Zwischenbereich zwischen den Einzelzellen erstrecken und die Elektrolytmembranen (20) die Querleitstruktur (22) abdichtend von jeweils einer Seite bedecken, wobei die Querleitstruktur (22) aus flächigen Lochblechen und/oder Streckmetallen bestehen.

2. Brennstoffzellenanordnung nach Anspruch 1, **dadurch gekennzeichnet, daß** das Gehäuse (24) der Brennstoffzelle im Zwischenbereich (Z) beide Membranen (20) unter Druck kontaktiert.

3. Brennstoffzellenanordnung nach Anspruch 1, **dadurch gekennzeichnet, daß** im Zwischenbereich (Z) eine Dichtung (23) zwischen dem Gehäuse (24) der Brennstoffzelle und jeder Membran (20) angeordnet ist.

4. Brennstoffzellenanordnung nach mindestens einem der vorhergehenden Ansprüche, **dadurch gekennzeichnet, daß** die Querleitstruktur (22) aus Edelstahl oder Titan besteht.

5. Brennstoffzellenanordnung nach mindestens einem der vorhergehenden Ansprüche, **dadurch gekennzeichnet, daß** die Elektrolytmembran (20) aus einer Kationenaustauschermembran besteht, die hydrolysestabil und stabil gegenüber Oxidation ist.

6. Brennstoffzellenanordnung nach Anspruch 5, **dadurch gekennzeichnet, daß** die Kationenaustauschermembran (20) stabil gegenüber Wasserstoff oder stabil gegenüber Methanol ist.

7. Brennstoffzellenanordnung nach Anspruch 5 oder 6, **dadurch gekennzeichnet daß** die Elektrolytmembran (20) aus fluorierten Membranen, Membranen aus sulfonierten Polymeren mit aromatischem oder teilweise aromatischem Rückgrat wie Polysulfone, Polethersulfone, Polyetherketone oder Polybenzimidazole oder sulfonierten Polymeren wie Polystyrole besteht.

8. Brennstoffzellenanordnung nach mindestens einem der vorhergehenden Ansprüche, **dadurch gekennzeichnet, daß** die Querleitstrukturen (22) oberflächenveredelt, beispielsweise vergoldet sind.

9. Brennstoffzellenanordnung nach mindestens einem der vorhergehenden Ansprüche, **dadurch gekennzeichnet, daß** im Zwischenbereich (Z) zwischen der Querleitstruktur (22) und jeder der beidseitigen an diese anliegenden Membranen (20) eine elektrisch nichtleitende Folie (26) angeordnet ist.

10. Brennstoffzellenanordnung nach mindestens einem der vorhergehenden Ansprüche, **dadurch gekennzeichnet, daß** im Zwischenbereich (Z) die Querleitstruktur (22, 30) mit einem inerten Material (31), vorzugsweise einem Kunststoff, insbesondere einem Polymer, beschichtet ist.

11. Brennstoffzellenanordnung nach mindestens einem der vorhergehenden Ansprüche, **dadurch gekennzeichnet, daß** die Querleitstruktur aus einem Material besteht, das für den Brennstoff auch in Richtung der Flächenausdehnung durchlässig ist und im Zwischenbereich mit einem für den Brennstoff undurchlässigen Material beschichtet ist.

12. Brennstoffzellenanordnung nach einem der Ansprüche 9 bis 11, **dadurch gekennzeichnet, daß** die Beschichtung (Folien oder Polymerbeschichtungen) der Querleitstruktur im Zwischenbereich aus oxidationsstabilen, reduktionsstabilen und hydrolyse stabilen Materialien ohne Ionenleitfähigkeit und ohne Elektronenleitfähigkeit bestehen.

13. Brennstoffzellenanordnung nach Anspruch 12, **dadurch gekennzeichnet, daß** die Beschichtung der Querleitstruktur im Zwischenbereich aus Polysulfonen, Polyethersulfonen, Polyetherketonen, Polybenzimidazolen oder aus teil- oder perfluorierten Polymeren, wie auch Polytetrafluorethylen, oder Polyethylen, Polypropylen oder Polystyrol bestehen.

14. Brennstoffzellenanordnung nach mindestens einem der vorhergehenden Ansprüche, **dadurch gekennzeichnet, daß** das Gehäuse im Bereich der Elektroden jeder Einzelzelle Gasverteilungsstrukturen zur Zufuhr von Brennstoff enthalten.

15. Brennstoffzellenanordnung nach mindestens einem der vorhergehenden Ansprüche, **dadurch gekennzeichnet, daß** der Brennstoff ein Gas wie Wasserstoff, gereinigtes Reformiergas oder Methanol ist.

16. Brennstoffzellenstapel, **dadurch gekennzeichnet, daß** mehrere Brennstoffzellen aus linearen, flächigen Anordnungen von Einzelzellen nach mindestens einem der vorhergehenden Ansprüche gestapelt übereinander angeordnet sind, wobei die einzelnen Anordnungen durch Gehäusezwischenplatten voneinander getrennt und die erste und letzte Anordnung durch Gehäuseendplatten abgeschlossen sind.

## Claims

1. Fuel cell arrangement for high starting voltages, consisting of a spatial arrangement of at least two individual fuel cells in a housing (24), each comprising an electrolyte membrane (20) coated on both sides with electrodes (21) as anode and cathode, whereby the relevant consecutively adjacent individual cells are electrically switched in series in that the anode of one individual cell is connected with the cathode of the adjacent individual cell via an electrically conductive transverse conductor structure (22), which is non-permeable for fuel across the level of its spatial expansion in the interim area, and whereby the electrolyte membranes (20) of adjacent individual cells extend between the interim area (Z) between the individual cells and overlap each other in an overlapping area, and whereby the anodes and cathodes of the individual cells do not extend into the interim area between the individual cells, and whereby the electrolyte membrane (20) sealingly covers the transverse conductor structure (22) from one side respectively, whereby the transverse conductor structure (22) consists of spatial perforated metal sheets and/or stretch metals.

2. Fuel cell arrangement according to Claim 1, **characterised in that** the housing (24) of the fuel cell contacts both membranes (20) under pressure in the interim area (Z).

3. Fuel cell arrangement according to Claim 1, **characterised in that** a seal (23) is located between the housing (24) of the fuel cell and each membrane (20) in the interim area (Z).

4. Fuel cell arrangement according to at least one of the preceding Claims, **characterised in that** the transverse conductor structure (22) consists of stainless steel or titanium.

5. Fuel cell arrangement according to at least one of the preceding Claims, **characterised in that** the electrolyte membrane (20) consists of a cationic exchange membrane which is stable during hydrolysis and stable during oxidisation.

6. Fuel cell arrangement according to Claim 5, **characterised in that** the cationic exchange membrane (20) is stable when exposed to hydrogen, and stable when exposed to methanol.

7. Fuel cell arrangement according to Claim 5 or 6, **characterised in that** the electrolyte membrane (20) consists of fluoridated membranes, membranes made from sulfonated polymers with an aromatic or a partially aromatic backbone such as polysulfones, polethersulfones, polyetherketones, or polybenzimidazoles, or sulfonated polymers such as polystyrols.

8. Fuel cell arrangement according to at least one of the preceding Claims, **characterised in that** the transverse conductor structures (22) are surface refined, for example gold plated.

9. Fuel cell arrangement according to at least one of the preceding Claims, **characterised in that** an electrically non-conductive foil (26) is located in the interim area (Z) between the transverse conductor structure (22) and each one of the membranes (20) abutting against the same on both sides.

10. Fuel cell arrangement according to at least one of the preceding Claims, **characterised in that** the transverse conductor structure (22, 30) is coated with an inert material (31), preferably a plastic, especially a polymer, in the interim area (Z).

11. Fuel cell arrangement according to at least one of the preceding Claims, **characterised in that** the transverse conductor structure consists of a material that is fuel permeable even in the direction of spatial expansion, and is coated in the interim area with a material that is non-permeable for fuel.

12. Fuel cell arrangement according to one of the Claims 9 to 11, **characterised in that** the coating (foil or polymer coating) of the transverse conductor structure in the interim area consists of materials that are stable during oxidation, stable during reduction, and stable during hydrolysis without being ion conductive and without being electron conductive.

13. Fuel cell arrangement according to Claim 12, **characterised in that** the coating of the transverse conductor structure in the interim area consists of polysulfones, polyethersulfones, polyetherketones, polybenzimidazoles, or of partially or perfluoridated polymers such as polytetrafluoroethylene or polyethylene, polypropylene, or polystyrol.

14. Fuel cell arrangement according to at least one of the preceding Claims, **characterised in that** the housing comprises gas distribution structures for the supply of fuel in the area of the electrodes of each individual cell.

15. Fuel cell arrangement according to at least one of the preceding Claims, **characterised in that** the fuel consists of a gas such as hydrogen, cleaned reformed gas, or methanol.

16. Fuel cell stack, **characterised in that** several fuel cells consisting of linear spatial arrangements of individual cells according to at least one of the preceding Claims are stacked on top of each other, whereby the individual arrangements are separated from each other by interim housing plates, and the first and last arrangement are closed by means of housing end plates.

## Revendications

1. Disposition de piles à combustible pour des tensions de sortie élevées, se composant d'une disposition plate d'au moins deux piles à combustible individuelles dans un boîtier (24), qui comprennent respectivement une membrane électrolytique (20) revêtue des deux côtés d'électrodes (21) en tant qu'anode et que cathode, les piles individuelles respectivement voisines en se suivant l'une l'autre faisant l'objet d'un branchement électrique en série, dans laquelle l'anode d'une pile individuelle est reliée avec la cathode de la pile individuelle voisine par une structure de conduction transversale électroconductrice (22) qui est imperméable pour les combustibles dans le plan de son extension de surface dans la zone intermédiaire, dans laquelle les membranes électrolytiques (20) des piles individuelles voisines s'étendent dans la zone intermédiaire (Z) entre les piles individuelles et se chevauchent mutuellement dans une zone de chevauchement, dans laquelle les anodes et les cathodes des piles individuelles ne s'étendent pas dans la zone intermédiaire entre les piles individuelles et dans laquelle les membranes électrolytiques (20) recouvrent respectivement la structure de conduction transversale (22) de manière étanche par un côté, la structure de conduction transversale (22) se composant de tôles perforées plates et/ou de métaux déployés.

2. Disposition de piles à combustible selon la revendication 1, **caractérisée en ce que** le boîtier (24) de la pile à combustible réalise dans la zone intermédiaire (Z) une mise en contact sous pression des deux membranes (20).

3. Disposition de piles à combustible selon la revendication 1, **caractérisée en ce que** dans la zone intermédiaire (Z) un joint (23) est disposé entre le boîtier (24) de la pile à combustible et chaque membrane (20).

4. Disposition de piles à combustible selon au moins l'une quelconque des revendications précédentes, **caractérisée en ce que** la structure de conduction transversale (22) se compose d'acier spécial ou de titane.

5. Disposition de piles à combustible selon au moins l'une quelconque des revendications précédentes, **caractérisée en ce que** la membrane électrolytique (20) se compose d'une membrane d'échangeur de cations, qui est stable par rapport à l'hydrolyse et est stable par rapport à l'oxydation.

6. Disposition de piles à combustible selon la revendication 5, **caractérisée en ce que** la membrane d'échangeur de cations (20) est stable par rapport à l'hydrogène ou est stable par rapport au méthanol.

7. Disposition de piles à combustible selon la revendication 5 ou 6, **caractérisée en ce que** la membrane électrolytique (20) se compose de membranes fluorées et de membranes en polymères sulfonées avec un fond aromatique ou partiellement aromatique, tel que des polysulfones, des sulfones de polyéther, des cétones de polyéther ou des zimidazoles de polybène ou des polymères sulfonés, tels que des polystyrènes.

8. Disposition de piles à combustible selon au moins l'une quelconque des revendications précédentes, **caractérisée en ce que** les structures de conduction transversale (22) comportent un traitement d'amélioration de la surface, par exemple une dorure.

9. Disposition de piles à combustible selon au moins l'une quelconque des revendications précédentes, **caractérisée en ce que** dans la zone intermédiaire (Z), entre la structure de conduction transversale (22) et chacune des membranes (20) s'appuyant de chaque côté sur celle-ci, est disposée une pellicule non électroconductrice (26).

10. Disposition de piles à combustible selon au moins l'une quelconque des revendications précédentes, **caractérisée en ce que** dans la zone intermédiaire (Z) la structure de conduction transversale (22, 30) est recouverte d'un matériau inerte (31), de préférence un matériau synthétique et en particulier un polymère.

11. Disposition de piles à combustible selon au moins l'une quelconque des revendications précédentes, **caractérisée en ce que** la structure de conduction transversale se compose d'un matériau qui est perméable pour le combustible même dans la direction de l'extension de surface et est recouverte dans la zone intermédiaire d'un matériau impennéable au combustible.

12. Disposition de piles à combustible selon l'une quelconque des revendications 9 à 11, **caractérisée en ce que** le revêtement (pellicules ou revêtements en polymère) de la structure de conduction transversale se compose, dans la zone intermédiaire, de matériaux qui sont stables par rapport à l'oxydation, stables par rapport à la réduction et stables par rapport à l'hydrolyse et qui ne sont pas conductibles pour les ions et pas conductibles pour les électrons.

13. Disposition de piles à combustible selon la revendication 12, **caractérisée en ce que** le revêtement de la structure de conduction transversale se compose, dans la zone intennédiaire, de polysulfones, de sulfones de polyéther, de cétones de polyéther ou de zimidazoles de polybène ou de polymères partiels ou perfluorés, et aussi de polytétrafluoréthylène ou de polyéthylène, de polypropylène ou de polystyrène.

14. Disposition de piles à combustible selon au moins l'une quelconque des revendications précédentes, **caractérisée en ce que** le boîtier comprend, dans la zone des électrodes de chaque pile individuelle, des structures de répartition gazeuse pour l'alimentation en combustible.

15. Disposition de piles à combustible selon au moins l'une quelconque des revendications précédentes, **caractérisée en ce que** le combustible est un gaz, tel que de l'hydrogène, du gaz de reformage purifié où du méthanol.

16. Assemblage de piles à combustible, **caractérisé en ce que** plusieurs piles à combustible composées de dispositions linéaires et plates de piles individuelles selon au moins l'une quelconque des revendications précédentes sont disposées en étant empilées les unes sur les autres, les différentes dispositions étant séparées les unes des autres par des plaques intermédiaires de boîtier et la première et la dernière disposition étant fermées par des plaques d'extrémité de boîtier.
